# EUROPEAN PATENT APPLICATION

(11) **EP 3 062 487 A1**
(43) Date of publication of application: **31.08.2016**
(21) Application number: 16157686.3
(22) Date of filing: 26.02.2016
(51) Int. Cl.: H04L 29/08, H04L 12/26, H04W 4/00, H04L 12/24

(54) **METHOD AND APPARATUS FOR DETECTING SMART DEVICE**

(30) Priority: 26.02.2015 CN 201510088938
(71) Applicant: Xiaomi Inc., Beijing 100085 (CN)
(72) Inventor: ZHANG, Yanlu, 100085 Haidian District (CN); MENG, Deguo, 100085 Haidian District (CN); HOU, Enxing, 100085 Haidian District (CN)
(74) Representative: Robson, Aidan John

(57) **Abstract**

The present disclosure relates to a method and an apparatus for detecting a smart device. The method includes: sending (S101) a detecting instruction to a smart device to make the smart device perform network connection according to the detecting instruction; receiving (S102) information regarding results of the network connection returned by the smart device; and displaying (S103) the information regarding results of the network connection. Terminal of the present disclosure may display the information regarding results of the network connection for a user so that the user may detect the network connection condition of the smart device, and consequently user experience is improved.

## Description

### TECHNICAL FIELD

The present disclosure generally relates to the communication technical field, and more particularly, to a method and an apparatus for detecting a smart device.

### BACKGROUND

With the development of Internet technologies, smart devices have entered into a rapid development stage. Smart devices refer to various electronic devices capable of accessing the Internet, such as a smart light, a smart socket, a smart camera and the like. A user may control smart devices via the Internet, for example, a user may control on and off of a smart device, view information in a smart device, and the like. However, if the smart device cannot access the Internet, the user cannot control the smart device, and meanwhile the smart device cannot send failure information to a server and thereby the user cannot be informed about the failure.

### SUMMARY

In order to overcome the problem existing in related arts, the present disclosure provides a method and an apparatus for detecting a smart device.

According to a first aspect of embodiments of the present disclosure, there is provided a method for detecting a smart device. The method is applied in a terminal and includes:
sending a detecting instruction to a smart device to make the smart device perform network connection according to the detecting instruction;
receiving information regarding results of the network connection returned by the smart device; and
displaying the information regarding results of the network connection.

Optionally, before sending the detecting instruction to the smart device, the method further includes:
establishing a point-to-point connection with the smart device.

Optionally, the establishing a point-to-point connection with the smart device includes:
establishing the point-to-point connection with the smart device via a wired transmission manner, a WiFi transmission manner or a Bluetooth transmission manner.

Optionally, the information regarding results of the network connection includes information regarding a successful connection and information regarding a failed connection;
wherein the information regarding a failed connection includes information regarding reasons for connection failure.

According to a second aspect of embodiments of the present disclosure, there is provided a method for detecting a smart device. The method is applied in a smart device and includes:
receiving a detecting instruction sent from a terminal;
performing network connection according to the detecting instruction; and
returning information regarding results of the network connection to the terminal to make the terminal display the information regarding results of the network connection.

Optionally, before receiving the detecting instruction sent from the terminal, the method further includes:
establishing a point-to-point connection with the terminal.

Optionally, establishing a point-to-point connection with the terminal, includes:
receiving information for failure diagnosis operation input by a user;
when the smart device has accessed the Internet, disconnecting from the Internet and establishing the point-to-point connection with the terminal; and
when the smart device has not accessed the Internet, establishing the point-to-point connection with the terminal.

Optionally, the information regarding results of the network connection includes information regarding a successful connection and information regarding a failed connection;
wherein the information regarding a failed connection includes information regarding reasons for connection failure.

According to a third aspect of embodiments of the present disclosure, there is provided an apparatus for detecting a smart device. The apparatus is applied in a terminal and includes:
an instruction sending unit configured to send a detecting instruction to a smart device to make the smart device perform network connection according to the detecting instruction;
a result receiving unit configured to receive information regarding results of the network connection returned by the smart device; and
a result display unit configured to display the information regarding results of the network connection.

Optionally, the apparatus further includes:
a first connection unit configured to, before the detecting instruction is sent to the smart device, establish a point-to-point connection with the smart device.

Optionally, the first connection unit includes:
a first connection subunit configured to establish the point-to-point connection with the smart device via a wired transmission manner, a WiFi transmission manner or a Bluetooth transmission manner.

Optionally, the information regarding results of the network connection includes information regarding a successful connection and information regarding a failed connection;
wherein the information regarding a failed connection includes information regarding reasons for connection failure.

According to a fourth aspect of embodiments of the present disclosure, there is provided an apparatus for detecting a smart device. The apparatus is applied in a smart device and includes:
an instruction receiving unit configured to receive a detecting instruction sent from a terminal;
a network connection unit configured to perform network connection according to the detecting instruction; and
a result returning unit configured to return information regarding results of the network connection to the terminal to make the terminal display the information regarding results of the network connection.

Optionally, the apparatus further includes:
a second connection unit configured to, before the detecting instruction sent from the terminal is received, establish a point-to-point connection with the terminal.

Optionally, the second connection unit includes:
an operation receiving subunit configured to receive information for failure diagnosis operation input by a user;
a second connection subunit configured to, when the smart device has accessed the Internet, disconnect from the Internet and establish the point-to-point connection with the terminal; and
a third connection subunit configured to, when the smart device has not accessed the Internet, establish the point-to-point connection with the terminal.

Optionally, the information regarding results of the network connection includes information regarding a successful connection and information regarding a failed connection;
wherein the information regarding a failed connection includes information regarding reasons for connection failure.

According to a fifth aspect of embodiments of the present disclosure, there is provided an apparatus for detecting a smart device, including:
a processor; and
a memory for storing instructions executable by the processor;
wherein the processor is configured to perform:
sending a detecting instruction to a smart device to make the smart device perform network connection according to the detecting instruction;
receiving information regarding results of the network connection returned by the smart device; and
displaying the information regarding results of the network connection.

According to a sixth aspect of embodiments of the present disclosure, there is provided an apparatus for detecting a smart device, including:
a processor; and
a memory for storing instructions executable by the processor;
wherein the processor is configured to perform:
receiving a detecting instruction sent from a terminal;
performing network connection according to the detecting instruction; and
returning information regarding results of the network connection to the terminal to make the terminal display the information regarding results of the network connection.

According to a seventh aspect of embodiments of the present disclosure, there is provided a computer program which, when being executed on a processor of an apparatus, performs any one of the above methods.

The technical solutions provided by embodiments of the present disclosure may have the following advantageous effects:

The smart device of the present disclosure may perform network connection after receiving a detecting instruction sent from a terminal, and return information regarding results of the network connection to the terminal, and thus the terminal may display the information regarding results of the network connection for a user so that the user may detect the network connection condition of the smart device, and consequently user experience is improved.

When the smart device of the present disclosure cannot access the Internet, the reason why the smart device cannot access the Internet can be returned to the terminal, so that the user may perform corresponding process with respect to the reason, and thereby user experience is improved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart showing a method for detecting a smart device according to an exemplary embodiment.
Fig. 2 is a flowchart showing another method for detecting a smart device according to an exemplary embodiment.
Fig. 3 is a flowchart showing another method for detecting a smart device according to an exemplary embodiment.
Fig. 4 is a diagram illustratively showing a home application scenario according to an exemplary embodiment.
Fig. 5 is a block diagram showing an apparatus for detecting a smart device according to an exemplary embodiment.
Fig. 6 is a block diagram showing another apparatus for detecting a smart device according to an exemplary embodiment.
Fig. 7 is a block diagram showing another apparatus for detecting a smart device according to an exemplary embodiment.
Fig. 8 is a block diagram showing another apparatus for detecting a smart device according to an exemplary embodiment.
Fig. 9 is a block diagram showing another apparatus for detecting a smart device according to an exemplary embodiment.
Fig. 10 is a block diagram showing another apparatus for detecting a smart device according to an exemplary embodiment.
Fig. 11 is a block diagram showing a structure of an apparatus for detecting a smart device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

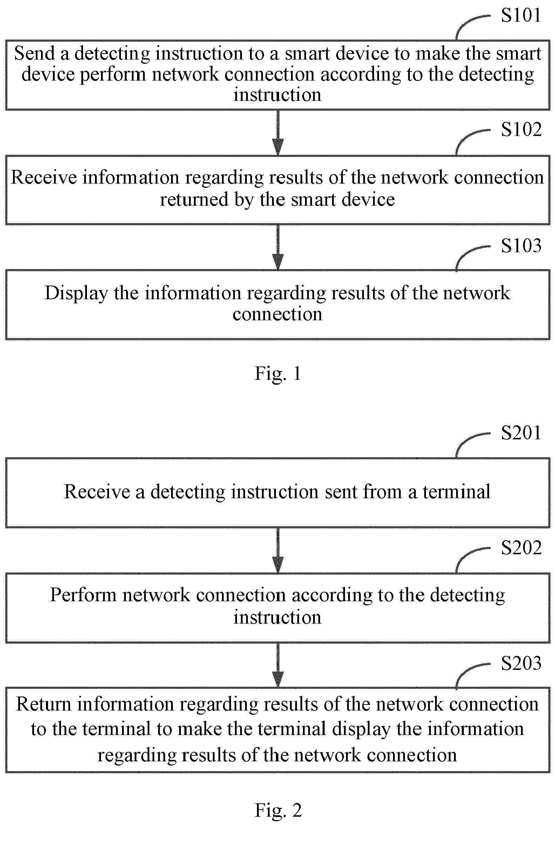

Fig. 1 is a flowchart showing a method for detecting a smart device according to an exemplary embodiment.

Referring to Fig. 1, the method for detecting a smart device may be applied in a terminal and include the following steps:

In step S101, a detecting instruction is sent to a smart device to make the smart device perform network connection according to the detecting instruction.

In the embodiment, the terminal may firstly establish a point-to-point connection with the smart device, and send the detecting instruction to the smart device via the point-to-point connection according to a designated operation by a user, and after receiving the detecting instruction, the smart device may perform network connection.

In step S102, information regarding results of the network connection returned by the smart device is received.

In the embodiment, the smart device may return the information regarding results of the network connection to the terminal. The information regarding results of the network connection includes information regarding a successful connection and information regarding a failed connection. The information regarding a failed connection includes information regarding detailed reasons for connection failure.

In step S103, the information regarding results of the network connection is displayed.

Based on the previous step S102, after receiving the information regarding results of the network connection returned by the smart device, the terminal displays the information regarding results of the network connection for user's view.

It can be seen from the above description that the smart device of the present disclosure may perform network connection after receiving a detecting instruction sent from a terminal, and return information regarding results of the network connection to the terminal, and thus the terminal may display the information regarding results of the network connection for a user so that the user may detect the network connection condition of the smart device, and consequently user experience is improved.

Fig. 2 is a flowchart showing another method for detecting a smart device according to an exemplary embodiment.

Referring to Fig. 2, the method for detecting a smart device may be applied in a smart device, and include the following steps.

In step S201, a detecting instruction sent from a terminal is received.

In the embodiment, the smart device may firstly establish a point-to-point connection with the terminal, and then receive the detecting instruction sent by the terminal via the point-to-point connection.

In step S202, network connection is performed according to the detecting instruction.

In step S203, information regarding results of the network connection is returned to the terminal to make the terminal display the information regarding results of the network connection.

In the embodiment, if the smart device accesses the Internet successfully, the smart device returns the information regarding results of the network connection which indicates the successful connection to the terminal. If the smart device cannot access the Internet, the smart device returns the information regarding results of the network connection which indicates the connection failure to the terminal. Further, the smart device may concurrently return the information for the reasons why the smart device cannot access the Internet to the terminal.

It can be seen from the above description that the smart device of the present disclosure may perform network connection after receiving a detecting instruction sent from a terminal, and return information regarding results of the network connection to the terminal, and thus the terminal may display the information regarding results of the network connection for a user so that the user may detect the network connection condition of the smart device, and consequently user experience is improved.

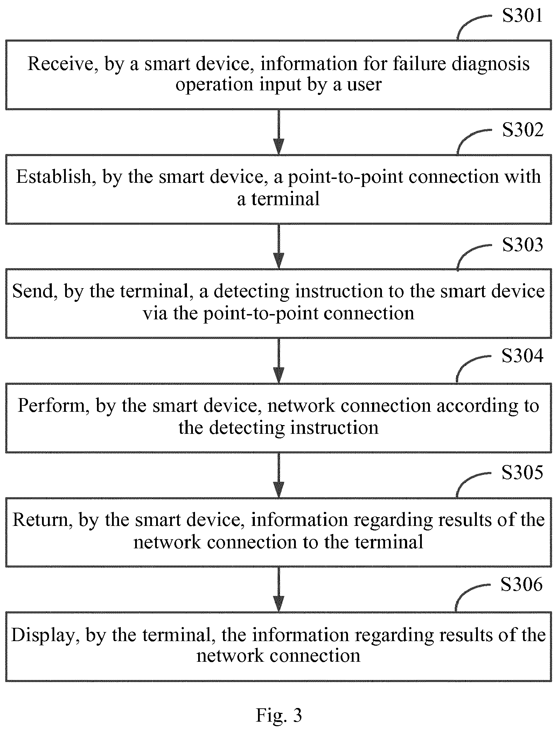

Fig. 3 is a flowchart showing another method for detecting a smart device according to an exemplary embodiment.

Referring to Fig. 3, the method for detecting a smart device may include the following steps.

In step S301, a smart device receives information for failure diagnosis operation input by a user.

In the present embodiment, when a user wants to detect the network connection condition of a smart device, the user may input information for failure diagnosis operation on the smart device, for example, the user may input the failure diagnosis operation by designated keys on the smart device, or may input the failure diagnosis operation by preset key combination, for example, two consecutive long pressing on a designated key, and the present disclosure does not impose specific limitations on this.

In step S302, the smart device establishes a point-to-point connection with a terminal.

Based on the previous step S301, after detecting the information for failure diagnosis operation input by the user, the smart device may perform the following two operations according to the network connection condition of itself: when the smart device has accessed the Internet, the smart device disconnects from the Internet, and establishes a point-to-point connection with the terminal; when the smart device has not accessed the Internet, the smart device directly establishes a point-to-point connection with the terminal.

The smart device may establish the point-to-point connection with the terminal via a wired transmission manner, a Wireless Fidelity (WiFi) transmission manner or a Bluetooth transmission manner. For example, the user may connect the terminal with the smart device via a cable, and the smart device may establish a wired point-to-point connection with the terminal after detecting the information for failure diagnosis operation input by the user. As another example, the smart device may start a Bluetooth function after detecting the information for failure diagnosis operation input by the user, and then establish, via the Bluetooth transmission manner, a point-to-point connection with a terminal which has started its Bluetooth function. Rather, one of ordinary skill in this art may employ other transmission manners to establish the point-to-point connection between the smart device and the terminal according to related technologies, and the present disclosure does not impose specific limitations on this.

In step S303, the terminal sends a detecting instruction to the smart device via the point-to-point connection.

Based on the previous step S302, when the smart device establishes a point-to-point connection with the terminal, the user may send a detecting instruction to the smart device via the terminal. For example, the user may send the detecting instruction to the smart device through the application (APP) capable of controlling the smart device installed in the terminal.

In an optional embodiment of the present disclosure, when the smart device establishes the point-to-point connection with the terminal, the terminal may display for the user a prompt indicating that the connection with the smart device is established, and based on the prompt, the user may input an operation for sending the detecting instruction in the terminal, for example, by tapping a preset button, or by voice input and the like, the user may input the operation for sending the detecting instruction. After detecting the operation for sending the detecting instruction, the terminal sends the detecting instruction to the smart device via the point-to-point connection.

In step S304, the smart device performs network connection according to the detecting instruction.

It can be seen from the previous step S302 that the smart device does not access the Internet currently, and in the step, the smart device performs network connection according to the detecting instruction after receiving the detecting instruction sent from the terminal.

In step S305, the smart device returns information regarding results of the network connection to the terminal.

In the present embodiment, after the smart device finishes the network connection, the smart device returns the information regarding results of the network connection to the terminal. The information regarding results of the network connection may include information regarding a successful connection and information regarding a failed connection. If the smart device successfully accesses the Internet, the smart device returns the information regarding results of the network connection which indicates the successful connection to the terminal. If the smart device cannot access the Internet, the smart device returns the information regarding results of the network connection which indicates the failed connection to the terminal. The smart device may try to access the Internet again when the smart device cannot access the Internet, and when preset connection number of times is reached and the smart device can still not access the Internet, the smart device returns the information regarding results of the network connection which indicates the failed connection to the terminal. Meanwhile, the smart device may also return the information regarding reasons why the smart device cannot access the Internet to the terminal. The information regarding reasons why the smart device cannot access the Internet may include IP address obtaining failure, failed connection to a router, DNS (Domain Name System) parse failure, failed connection to the Internet server and the like.

In step S306, the terminal displays the information regarding results of the network connection.

Based on the previous step S305, after receiving the information regarding results of network connection returned by the smart device, the terminal displays the information regarding results of the network connection. If the information regarding results of the network connection is the information regarding a failed connection, the user may perform corresponding process according to the information regarding results of the network connection. For example, if the reason information why the smart device cannot access the Internet is the failed connection to a router, the user may try to reconfigure a white list of routers; if the reason information why the smart device cannot access the Internet is the IP address obtaining failure, the user may try to restart the router to restart a DHCP (Dynamic Host Configuration Protocol) service, and the like.

In the embodiment, when the smart device cannot access the Internet, the smart device may return the reason why the smart device cannot access the Internet to the terminal, so that the user may perform corresponding process with respect to the reason, and thereby user experience is improved.

It can be seen from the above description that the smart device in the present disclosure may perform the network connection after receiving the detecting instruction sent from the terminal and return information regarding results of the network connection to the terminal. The terminal may thereby display the information regarding results of the network connection to the user so that the user may detect the network connection condition of the smart device, and consequently the user experience is improved.

Specific implementations of the present disclosure are described below with reference to a particular embodiment.

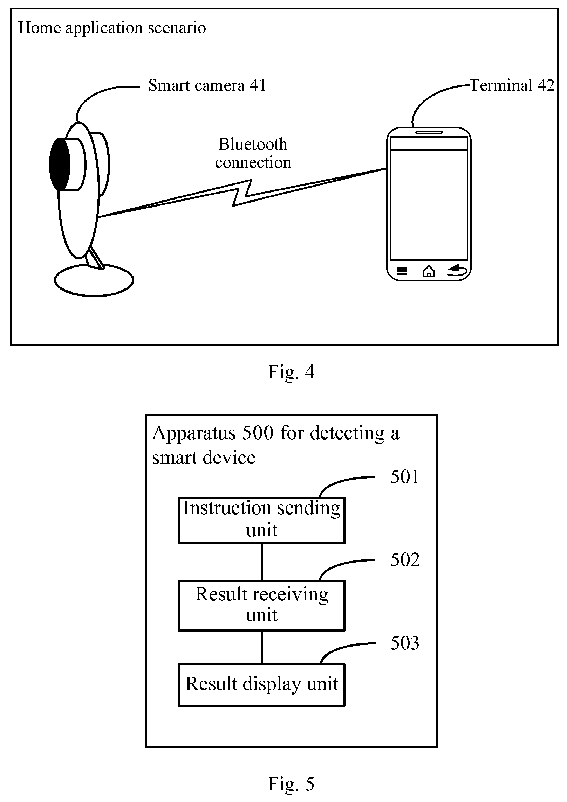

Referring to Fig. 4, it is a diagram showing a home application scenario according to an exemplary embodiment of the present disclosure. When a user wants to detect the network connection condition of a smart camera 41, the user may long press a detecting key on the smart camera 41 to make the smart camera 41 disconnect from the current network connection, and then the smart camera starts a Bluetooth function to establish a Bluetooth connection with a terminal 42. The user may send a detecting instruction to the smart camera 41 via the terminal 42, and the smart camera 41 performs network connection, and returns the information regarding results of the network connection to the terminal 42, and the terminal 42 displays the information regarding results of the network connection for the user's review.

In the application scenario as shown in Fig. 4, the terminal may detect the smart camera by the methods provided by the embodiments as shown in Fig. 1 or 3, and the smart camera may detect the network connection condition by the method provided by embodiments as shown in Fig. 2 or 3, and detailed description is omitted here.

Corresponding to the above embodiments of the method for detecting a smart device, the present disclosure further provides embodiments of an apparatus for detecting a smart device.

Fig. 5 is a block diagram showing an apparatus for detecting a smart device according to an exemplary embodiment.

Referring to Fig. 5, the apparatus 500 for detecting a smart device may be applied in a terminal and may include an instruction sending unit 501, a result receiving unit 502 and a result display unit 503.

The instruction sending unit 501 is configured to send a detecting instruction to a smart device to make the smart device perform network connection according to the detecting instruction.

The result receiving unit 502 is configured to receive information regarding results of the network connection returned by the smart device.

The result display unit 503 is configured to display the information regarding results of the network connection.

In the above embodiment, the smart device may perform network connection after receiving a detecting instruction sent from a terminal, and return information regarding results of the network connection to the terminal, and thus the terminal may display the information regarding results of the network connection for a user so that the user may detect the network connection condition of the smart device, and consequently user experience is improved.

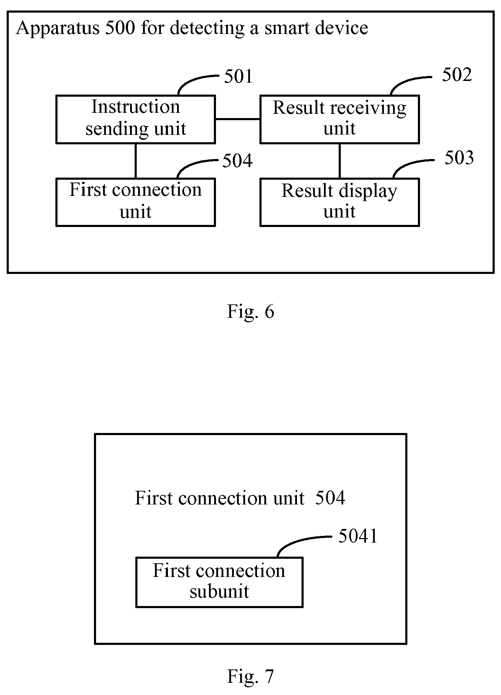

Fig. 6 is a block diagram showing another apparatus for detecting a smart device according to an exemplary embodiment.

Referring to Fig. 6, on the basis of the embodiment as shown in Fig. 5, the apparatus 500 for detecting a smart device may further include a first connection unit 504.

The first connection unit 504 is configured to, before the detecting instruction is sent to the smart device, establish a point-to-point connection with the smart device.

Fig. 7 is a block diagram showing another apparatus for detecting a smart device according to an exemplary embodiment.

Referring to Fig. 7, on the basis of the embodiment as shown in Fig. 6, the first connection unit 504 may include a first connection subunit 5041.

The first connection subunit 5041 is configured to establish the point-to-point connection with the smart device via a wired transmission manner, a WiFi transmission manner or a Bluetooth transmission manner.

Optionally, the information regarding results of the network connection includes information regarding a successful connection and information regarding a failed connection.

The information regarding a failed connection includes information regarding reasons for connection failure.

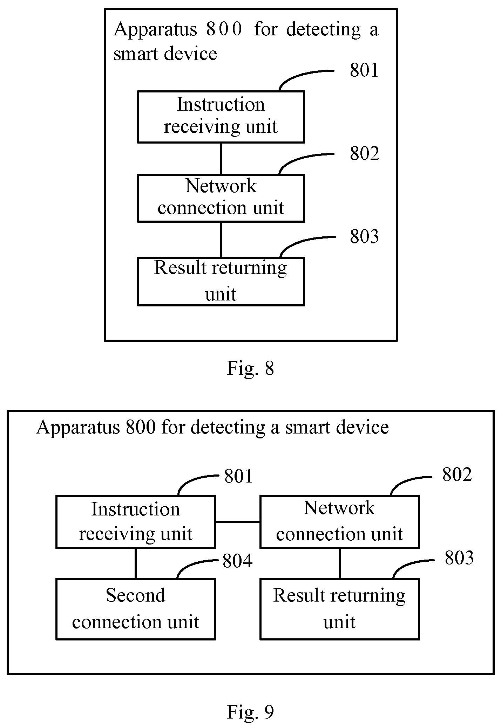

Fig. 8 is a block diagram showing an apparatus for detecting a smart device according to an exemplary embodiment.

Referring to Fig. 8, the apparatus 800 for detecting a smart device may be applied in a smart device and may include an instruction receiving unit 801, a network connection unit 802 and a result returning unit 803.

The instruction receiving unit 801 is configured to receive a detecting instruction sent from a terminal.

The network connection unit 802 is configured to perform network connection according to the detecting instruction.

The result returning unit 803 is configured to return information regarding results of the network connection to the terminal to make the terminal display the information regarding results of the network connection.

In the above embodiment, the smart device may perform network connection after receiving a detecting instruction sent from a terminal, and return information regarding results of the network connection to the terminal, and thus the terminal may display the information regarding results of the network connection for a user so that the user may detect the network connection condition of the smart device, and consequently user experience is improved.

Fig. 9 is a block diagram showing another apparatus for detecting a smart device according to an exemplary embodiment.

Referring to Fig. 9, on the basis of the embodiment as shown in Fig. 8, the apparatus 800 for detecting a smart device may further include a second connection unit 804.

The second connection unit 804 is configured to, before the detecting instruction sent from the terminal is received, establish a point-to-point connection with the terminal.

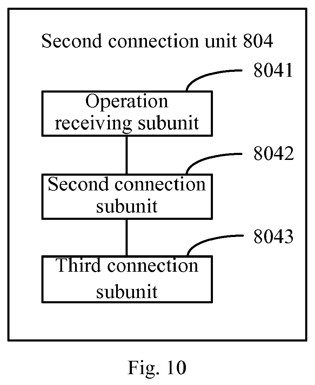

Fig. 10 is a block diagram showing another apparatus for detecting a smart device according to an exemplary embodiment.

Referring to Fig. 10, on the basis of the embodiment as shown in Fig. 9, the second connection unit 804 may include an operation receiving subunit 8041, a second connection subunit 8042 and a third connection subunit 8043.

The operation receiving subunit 8041 is configured to receive information for failure diagnosis operation input by a user.

The second connection subunit 8042 is configured to, when the smart device has accessed the Internet, disconnect from the Internet and establish the point-to-point connection with the terminal.

The third connection subunit 8043 is configured to, when the smart device has not accessed the Internet, establish the point-to-point connection with the terminal.

Optionally, the information regarding results of the network connection includes information regarding a successful connection and information regarding a failed connection.

The information regarding a failed connection includes information regarding reasons for connection failure.

For realizing of functions of respective units in the above apparatus, refer to the above description regarding corresponding steps in the methods, and detailed descriptions are omitted.

The embodiments of apparatus basically correspond to the embodiments of methods, and thus for related portions, the description about the embodiments of methods may be referred to. The above described embodiments of apparatus are only illustrative, and portions described as separated units may be or may not be physically separated, and the portions shown as respective units may be or may not be physical units, i.e., the portions may be located at one place, or may be distributed over a plurality of network units. A part or whole of the modules may be selected to realize the objects of the technical solutions of the present disclosure according to actual requirements. One of ordinary skill in this art may understand and practice the technical solutions of the present disclosure without creative work.

Correspondingly, the present disclosure further provides an apparatus for detecting a smart device, including: a processor; and a memory for storing instructions executable by the processor; wherein the processor is configured to perform: sending a detecting instruction to a smart device to make the smart device perform network connection according to the detecting instruction; receiving information regarding results of the network connection returned by the smart device; and displaying the information regarding results of the network connection.

Correspondingly, the present disclosure further provides a non-transitory computer-readable storage medium, when the instructions stored in the storage medium are executed by a processor of a terminal, the instructions stored in the storage medium causes the terminal to perform a method for detecting a smart device, the method including: sending a detecting instruction to a smart device to make the smart device perform network connection according to the detecting instruction; receiving information regarding results of the network connection returned by the smart device; and displaying the information regarding results of the network connection.

Correspondingly, the present disclosure further provides an apparatus for detecting a smart device, including: a processor; and a memory for storing instructions executable by the processor; wherein the processor is configured to perform: receiving a detecting instruction sent from a terminal; performing network connection according to the detecting instruction; and returning information regarding results of the network connection to the terminal to make the terminal display the information regarding results of the network connection.

Correspondingly, the present disclosure further provides a non-transitory computer-readable storage medium, when the instructions stored in the storage medium are executed by a processor of a smart device, the instructions stored in the storage medium causes the smart device to perform a method for detecting a smart device, the method including: receiving a detecting instruction sent from a terminal; performing network connection according to the detecting instruction; and returning information regarding results of the network connection to the terminal to make the terminal display the information regarding results of the network connection.

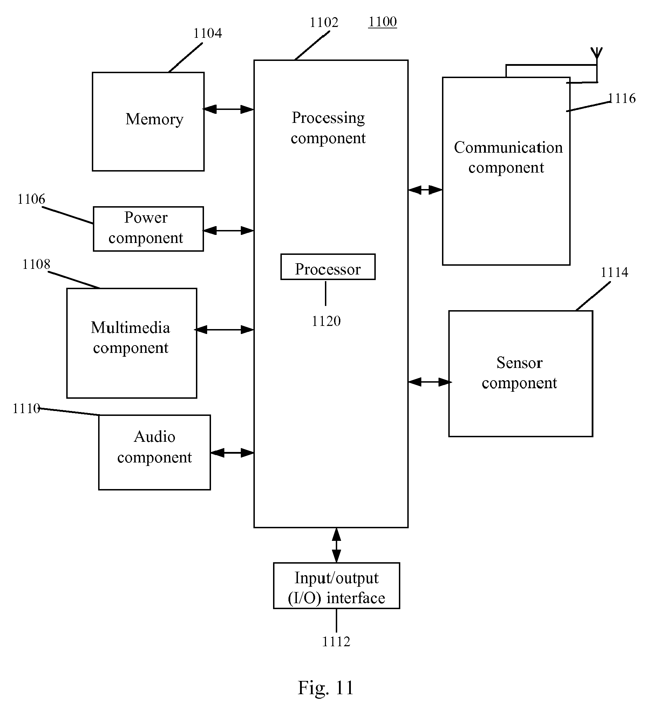

Fig. 11 is a block diagram of an apparatus 1100 for detecting a smart device according to an exemplary embodiment. For example, the apparatus 1100 may be a mobile phone, a computer, a digital broadcast terminal, a messaging device, a gaming console, a tablet, a medical device, exercise equipment, a personal digital assistant, and the like.

Referring to Fig. 11, the apparatus 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the apparatus 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the apparatus 1100. Examples of such data include instructions for any applications or methods operated on the apparatus 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the apparatus 1100. The power component 1106 may include a power management system, one or more power sources, and any other components associated with the generation, management, and distribution of power in the apparatus 1100.

The multimedia component 1108 includes a screen providing an output interface between the apparatus 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and the rear camera may receive an external multimedia datum while the apparatus 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the apparatus 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the apparatus 1100. For instance, the sensor component 1114 may detect an open/closed status of the apparatus 1100, relative positioning of components, e.g., the display and the keypad, of the apparatus 1100, a change in position of the apparatus 1100 or a component of the apparatus 1100, a presence or absence of user contact with the apparatus 1100, an orientation or an acceleration/deceleration of the apparatus 1100, and a change in temperature of the apparatus 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the apparatus 1100 and other devices. The apparatus 1100 can access a wireless network based on a communication standard, such as WiFi, 2G, or 3G, or a combination thereof. In one exemplary embodiment, the communication component 1116 receives a broadcast signal or broadcast associated information from an external broadcast management system via a broadcast channel. In one exemplary embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1104, executable by the processor 1120 in the apparatus 1100, for performing the above-described methods. For example, the non-transitory computer-readable storage medium may be a ROM, a RAM, a CD-ROM, a magnetic tape, a floppy disc, an optical data storage device, and the like.

Other embodiments of the present disclosure will be apparent to those skilled in the art from consideration of the specification and practice of the invention disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the invention being indicated by the following claims.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for detecting a smart device, wherein the method is applied in a terminal and comprises:
sending (S101) a detecting instruction to a smart device to make the smart device perform network connection according to the detecting instruction;
receiving (S102) information regarding results of the network connection returned by the smart device; and
displaying (S103) the information regarding results of the network connection.

2. The method for detecting a smart device according to claim 1, wherein before sending (S101) the detecting instruction to the smart device, the method further comprises:
establishing (S302) a point-to-point connection with the smart device.

3. The method for detecting a smart device according to claim 2, wherein the establishing a point-to-point connection with the smart device comprises:
establishing the point-to-point connection with the smart device via a wired transmission manner, a WiFi transmission manner or a Bluetooth transmission manner.

4. The method for detecting a smart device according to claim 1, wherein the information regarding results of the network connection comprises information regarding a successful connection and information regarding a failed connection;
wherein the information regarding a failed connection comprises information regarding reasons for connection failure.

5. A method for detecting a smart device, wherein the method is applied in a smart device and comprises:
receiving (S201) a detecting instruction sent from a terminal;
performing (S202) network connection according to the detecting instruction; and
returning (S203) information regarding results of the network connection to the terminal to make the terminal display the information regarding results of the network connection.

6. The method for detecting a smart device according to claim 5, wherein before receiving (S201) the detecting instruction sent from the terminal, the method further comprises:
establishing (S302) a point-to-point connection with the terminal.

7. The method for detecting a smart device according to claim 6, wherein establishing a point-to-point connection with the terminal, comprises:
receiving (S301) information for failure diagnosis operation input by a user;
when the smart device has accessed the Internet, disconnecting from the Internet and establishing the point-to-point connection with the terminal; and
when the smart device has not accessed the Internet, establishing the point-to-point connection with the terminal.

8. The method for detecting a smart device according to claim 5, wherein the information regarding results of the network connection comprises information regarding a successful connection and information regarding a failed connection;
wherein the information regarding a failed connection comprises information regarding reasons for connection failure.

9. An apparatus for detecting a smart device, wherein the apparatus is applied in a terminal and comprises:
an instruction sending unit (501) configured to send a detecting instruction to a smart device to make the smart device perform network connection according to the detecting instruction;
a result receiving unit (502) configured to receive information regarding results of the network connection returned by the smart device; and
a result display unit (503) configured to display the information regarding results of the network connection.

10. The apparatus for detecting a smart device according to claim 9, wherein the apparatus further comprises:
a first connection unit (504) configured to, before the detecting instruction is sent to the smart device, establish a point-to-point connection with the smart device.

11. The apparatus for detecting a smart device according to claim 10, wherein the first connection unit (504) comprises:
a first connection subunit (5041) configured to establish the point-to-point connection with the smart device via a wired transmission manner, a WiFi transmission manner or a Bluetooth transmission manner.

12. An apparatus for detecting a smart device, wherein the apparatus is applied in a smart device and comprises:
an instruction receiving unit (801) configured to receive a detecting instruction sent from a terminal;
a network connection (802) unit configured to perform network connection according to the detecting instruction; and
a result returning unit (803) configured to return information regarding results of the network connection to the terminal to make the terminal display the information regarding results of the network connection.

13. The apparatus for detecting a smart device according to claim 12, wherein the apparatus further comprises:
a second connection unit (804) configured to, before the detecting instruction sent from the terminal is received, establish a point-to-point connection with the terminal.

14. The apparatus for detecting a smart device according to claim 14, wherein the second connection unit (804) comprises:
an operation receiving subunit (8041) configured to receive information for failure diagnosis operation input by a user;
a second connection subunit (8042) configured to, when the smart device has accessed the Internet, disconnect from the Internet and establish the point-to-point connection with the terminal; and
a third connection subunit (8043) configured to, when the smart device has not accessed the Internet, establish the point-to-point connection with the terminal.

15. An apparatus for detecting a smart device, comprising:
a processor; and
a memory for storing instructions executable by the processor;
wherein the processor is configured to perform:
sending a detecting instruction to a smart device to make the smart device perform network connection according to the detecting instruction;
receiving information regarding results of the network connection returned by the smart device; and
displaying the information regarding results of the network connection.
